# EUROPEAN PATENT SPECIFICATION

(11) **EP 4 558 678 B1**
(45) Date of publication and mention of the grant of the patent: **14.01.2026**
(21) Application number: 23757976.8
(22) Date of filing: 15.08.2023
(51) Int. Cl.: D21C 5/00, D21C 9/10

(54) **METHOD OF PROCESSING CELLULOSIC WASTE MATERIAL AND DECOLOURIZED MATERIAL THUS OBTAINED**
VERFAHREN ZUR VERARBEITUNG VON CELLULOSEABFALLMATERIAL UND SO ERHALTENEM ENTFÄRBTEM MATERIAL
PROCÉDÉ DE TRAITEMENT DE DÉCHETS CELLULOSIQUES ET DE MATIÈRES DÉCOLORÉES AINSI OBTENUES

(30) Priority: 19.08.2022 FI 20225736
(43) Date of publication of application: 28.05.2025
(73) Proprietor: Infinited Fiber Company Oy, 02150 Espoo (FI)
(72) Inventor: SIREN, Sakari, 02150 Espoo (FI); NUOPPONEN, Markus, 02150 Espoo (FI)
(74) Representative: Laine IP Oy
(86) International application number: PCT/FI2023/050467
(87) International publication number: WO 2024/038224

(56) References cited:
- WO-A1-2018/073177
- WO-A1-2018/197756

## Description

### FIELD

The present invention relates to processing of recycled waste. In particular, the present invention concerns a method of processing recycled, mixed-coloured cellulosic waste. The invention also concerns the decolourized cellulosic pulp as such as well as the use thereof in processes for production of moulded objects such as regenerated cellulosic products or cellulosic derivatives, such as cellulose carbamate.

### BACKGROUND

Cellulose, the most abundant renewable organic material on earth, exhibits outstanding properties for fiber applications. The viscose process, despite its environmental challenges, is still the most widely utilized technology to manufacture regenerated cellulose fibers and films. Typically, in the viscose process, dissolving cellulose pulp produced from virgin materials is used as a starting material.

There is need to develop simpler and sustainable production processes, in particular to provide processes that allow for extended application of recycled cellulosic materials.

EP3529282B1 and WO2018104330A1 disclose a process for the recycling of cellulosic textiles. It discloses treatment of cellulose in an alkaline step and with oxygen at alkaline conditions with a pH in the range 9-13.5 and bleaching the material with ozone at acid conditions below pH 6.

SE2051513A1 discloses a method for ozone bleaching of pulp formed from recycled cellulosic textile material. The method comprising adding at least one acid to reduce pH of the pulp and performing the ozone bleaching at low pH.

EP3221511B1 provides a process for the production of treated pulps to increase the total process yield in the dissolving processes. The process comprises a step of contacting pulp with ozone in alkaline conditions with the aim of modifying the yield of conventional pulping or dissolving cellulose production.

FI 20175376A1 and Määttänen et al. Cellulose (2021) 28:3869-3886 disclose a process for treating textile-based materials, typically textile-based waste-materials.

WO2018197756A presents a process for treating textile-based materials, including two or more chemical and/or enzymatic treatment steps, at least one of which is alkaline treatment step.

WO2018073177A1 discloses a method for recycling textiles comprising cellulose with the following steps of optionally disintegrating the textile, swelling the cellulose and performing at least one bleaching step comprising bleaching with oxygen at alkaline or acid conditions.

### SUMMARY OF THE INVENTION

The invention is defined by the features of the independent claims. Some specific embodiments are defined in the dependent claims.

According to a first aspect of the present invention, there is provided a method of processing recycled cellulosic waste material, comprising the steps of providing cellulosic waste material containing colour pigments, dyes, colourants or combinations thereof, pulping the waste material to produce cellulosic pulp, and decolourizing the pulp with ozone under alkaline conditions.

According to a second aspect of the present invention, there is provided a decolourized cellulosic pulp.

According to a third aspect of the present invention, there is provided the use of the decolourized textile pulp in a process for production of cellulose carbamate.

Considerable benefits are obtained with the aid of the present invention. Surprisingly, by subjecting recycled cellulosic waste material, which contains colouring substances to an ozone treatment that is carried out at alkaline conditions efficient decolourization of material is achieved without impairing the mechanical properties of the cellulosic material. As tests have shown, a material treated as herein discussed will have a significantly improved whiteness without extensive degradation of the molecular chains compared to a material that has been subjected to ozone treatment under acid conditions.

The present invention provides for a simple, easy to apply, inexpensive treatment, that is industrially applicable under moderate conditions. In embodiments of the invention, cellulose is efficiently removed from non-cellulosic elements of mixed-fibre textiles. The treatment can be carried out by using existing infrastructure including ozonation equipment, such as ozone generators, reactors and mixers, e.g. the treatment may be carried out in pulp mills. The obtained cellulose is highly accessible to further chemical treatments, for example, carbamation, and it is generally suitable for dissolution in industrial processes, such as the viscose and lyocell processes.

Other features and advantages will become apparent from the following description.

### BRIEF DESCRIPTION OF THE DRAWING

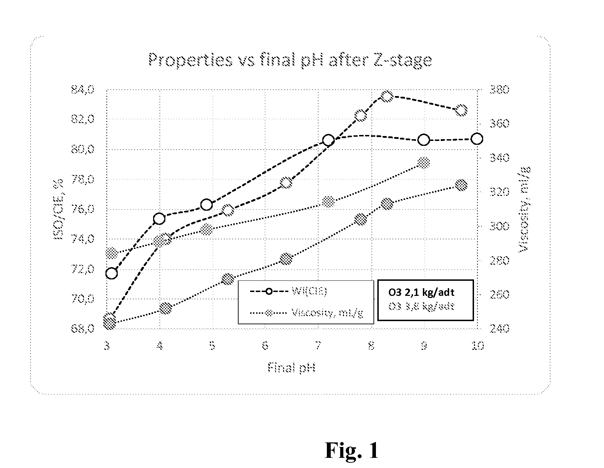

Figure 1 is a graphical depiction of CED viscosity and whiteness as a function of pH for two series of samples subjected to ozone treatments using different ozone loadings.

### EMBODIMENTS

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature. Unless otherwise indicated, room temperature is 25 °C.

Unless otherwise stated, properties that have been experimentally measured or determined herein have been measured or determined at atmospheric pressure.

It must also be noted that, as used in the specification and the appended claims, the singular forms "a," "an" and "the" include plural referents unless otherwise specified.

As used herein, the term "about" refers to a value, which is ± 5 % of the stated value.

In the present context, the term "CED viscosity" stands for dynamic viscosity measured according to the standard ISO 5351:2010, modified by filtering the obtained cellulose solution to measure and calculate viscosity of cellulose fraction of material (also referred to as "ISO 5351, modified"). This viscosity is measured as millilitres per gram.

In the present context, "whiteness" stands for "CIE whiteness", a value that can be determined by ISO 11475:2017. ISO 11475:2017 specifies a whiteness index and measurement methodology, which utilizes diffuse illumination with a light source configured to CIE standard illuminant D65. CIE D65 is an outdoor daylight illuminant, with a defined spectral power distribution approximating average mid-day sunlight. Whiteness measures the reflection of all wavelengths of light across the visible spectrum. The higher the measured whiteness rating (0-100 scale with exception of brighteners), the whiter the recycled cellulose will appear. Thus, whiteness is an essential parameter for cellulosic textile pulp, whereas e.g. ISO brightness, typically used in the pulp industry, does not reflect the quality requirement of the textile pulp definitely.

In the present context, the term "cellulosic material" stands for a material, which has a content of cellulose. Typically, the content is at least 10 % by weight of the material, in particular, the cellulosic waste material contains at least 20 %, for example at least 30 %, or at least 40 %, or at least 50 %, or at least 60 %, or at least 70 % by weight of cellulose. Typically, the cellulose is present in the form of fibres. The term "cellulosic material" also covers lignocellulosic material, i.e. materials that contain both cellulose and lignin.

In the present context, the term "waste" stands generally for material that has been discarded or abandoned, i.e. material which is not taken into use (e.g. unsold textiles, left-over bits of cloth or other material after cutting), or which no longer is used or useable for one original purpose, including also cellulosic powder generated during processing of textile waste. In the present context, the term "recycled", when used in connection to the cellulosic material, stands for material that has been recovered after having been discarded or abandoned and returned to further processing.

In the present context, the term "pre-consumer waste" stands for waste that is collected after production, for example at a factory, but before it reaches the end consumer.

In the present context, the term "post-consumer waste" stands for waste generated at various levels after use of the finished product by the end consumer.

In the present context, "paper" typically stands for fibrous material in the form of a web or sheet having a grammage of about 10 to about 120 g/m², typically about 20 to 115 g/m² or 30 to 110 g/m², such as 60 to 110 g/m². "Paperboard" (also referred to as "cardboard") stands for a fibrous material in the form of a web or sheet, for example shaped into a blank or package that has a grammage in the range from about 120 to about 750 g/m², typically about 130 to 700 g/m², or 150 to about 500 g/m², although these are no absolute limits.

The fibrous material of the paper or paperboard may comprise or consist of mechanical, semimechanical or chemical pulp or combinations thereof.

In the present context, the abbreviation "BDT" stands for bone dry (metric) ton, and "adt" for air dry (metric) ton.

Generally, the present method of processing cellulosic waste material comprises in a first step the provision of cellulosic waste material or a combination of cellulosic waste materials. The materials are, after an optional mechanical treatment, subjected to pulping, in particular chemical pulping, in a second step. Such pulping typically takes place at temperatures of less than 140 °C, for example at temperatures of 130 °C or less, such as 120 °C or less, in particular 110 °C or less, 105 °C or less, or 100 °C or less. For example, acidic pulping can be carried out at a temperature of about 60 to 95 °C, whereas alkaline pulping typically is carried out at temperatures of at least 95 °C.

In one embodiment, the chemical pulping step includes contacting the cellulosic waste material with acid and alkali. In particular, the material is subjected to a cascade of process steps in which it is separately contacted with acid and alkali. Typically, the material is first contacted with acid and then with alkali.

In one embodiment, if only cellulosic textile waste material is used, the pulping step particularly refers to an acid-alkali pre-treatment process contacting the textile waste material separately with acid and alkali, not to a kraft process used in the context of wood pulp.

In a third step (after acidic and/or alkaline treatment), the pulp obtained is subjected to an ozone treatment under alkaline conditions to decolourize the pulp. Ozone treatment is carried out at high consistency or medium consistency of the pulp, using ozone gas at atmospheric pressure or, correspondingly, at a pressure of 2 to 15, typically 7 to 11 bar(g).

In one embodiment, after the ozone treatment, the pulp is neutralized, or at least a part of or all excess alkali is removed, optionally by washing with water, and the washed material is dewatered to lower its water content.

In one embodiment, after the ozone treatment, the pulp is washed on a filter and then subjected to carbamation.

In one embodiment, after or before the ozone treatment, the pulp is subjected to one or more bleaching stages, in particular using in at least one stage oxygen at alkaline conditions.

In one embodiment, after or before the ozone treatment, the pulp is subjected to one or more bleaching stages, in particular using in at least one stage hydrogen peroxide - optionally in combination with oxygen - at alkaline conditions.

The material obtained can be used as a conventional dissolving pulp for the manufacture of moulded objects, for example by the viscose, lyocell or carbamate processes.

Next, the starting materials and the processing steps and the products according to various embodiments will be discussed in more detail.

The starting material of the present process comprises a cellulosic material which contains colouring substances. Such materials which are capable of conferring a colour onto the material or parts thereof. The coloured material may be partially or completely coloured. The colour can be conferred to the surface of the material or throughout the material.

In a first embodiment, the starting material comprises or consists of recycled paper, which comprises cellulose or lignocellulose. In one embodiment, the material comprises or consists of recycled paperboard comprising cellulose or lignocellulose. In one embodiment, the cellulosic waste material preferably comprises or consists of or consists essentially of recycled pre-consumer waste or post-consumer waste or industrial waste or a combination thereof.

Examples of recycled materials of the afore-kind include mixed paper and board grades, old or used corrugated containers, old or used newspapers and magazines, and high grade deinking and pulp substitutes. Industrial waste of the paper and pulp industry further includes paper and paperboard rolls, paper and paperboard bobbins and paper and paperboard reject, as well as zero fibres.

Cellulosic or lignocellulosic materials typically contain fibrous materials which are formed by cellulose, lignin and potentially hemicellulose. Natively, lignocellulosic materials further contain extractives (organic molecules) and metals and silica and other inorganic substances. Industrially processed materials, such as paper or paperboard materials, frequently contain also residues of inorganic or organic substances, such as pigments, fillers, sizes and other additives in addition to colouring substances including colouring pigments, inks and dyes. The fibrous material of recycled papers or paperboards can be bleached or unbleached.

Different colouring substances have different properties. In general, ink, especially printing ink, is intended to permanently change the pigmentation of an item, usually paper, and it may also change the texture of the item. Ink may bleed but it's usually intended to stay roughly where it is put, which is essential for being able to write clearly. Dyes are also intended to permanently change the pigmentation of an item, usually a fabric, but without changing the texture of the item. Dye typically soaks into a material and spreads out.

Typically, coloured paper or paperboard materials comprise sheets or strands or slivers of cellulosic or lignocellulosic materials which contain colouring pigments or dyes that have been provided to give original material coloured areas in the form of, for example, graphical signs, texts or symbols. Such coloured areas can be conferred to the material by printing or other graphic techniques. The coloured areas of the paper or paperboard are generally present on the surface of the material or on the sheets of the material.

In one embodiment, the recycled paper or recycled paperboard materials are to a mechanical treatment involving removal of ash and impurities, deinking, washing and/or refining. In addition, there is typically an acidic treatment by which the material is washed and inorganic substances, such as metals, are removed and the viscosity and the polydispersity of the polymers are adjusted.

Delignification pulping or cooking is performed before ozone decolourization. Processing may include alkaline treatment using hydroxide or carbonate compounds to remove lignin and especially hemicelluloses. Degree of polymerization of the recycled paper of paperboard material is prone to decrease during delignification and pulping treatments and other pre-treatments required to purify material suitable for textile use. The recycled material is not usable as a raw material if a degree of polymerization decreases to unnecessarily low level due to treatments. Thus, it is especially preferable to perform ozone decolourization in alkaline conditions where degree of polymerization stays relatively intact.

In a second, particularly preferred embodiment, the material comprises, consists of or consists essentially of textile waste material comprising cellulose.

In one embodiment, the recycled textile waste makes up a majority of the material, for example more than 50 % and up to 100 % by weight of the recycled cellulosic material comprises recycled textile waste.

In one embodiment, the cellulosic waste material comprises more than 50 %, 60 %, 70 %, 80 %, 90 or 95 %, by weight of textile waste material, that comprises cellulose, calculated from the total weight of the cellulosic waste material. In a preferred embodiment, 100 % by weight of the cellulosic waste material comprises textile waste material.

In one embodiment, the material comprises or consist of a combination or mixture of the afore-mentioned materials. Thus, the material can comprise both textile waste and recycled paper and/or paperboard.

The recycled cellulosic waste material can comprise pre- or post-consumer waste or industrial textile waste, e.g. working clothes, wipes or towels. Residual (pulp) fibres or fines or rejects from pulping processes or sockets and it can comprise waste collected from a variety of sources.

In the present context, the terms "pre-consumer waste" and "post-consumer waste" are equally applicable to both cellulosic waste comprising or consisting of paper and paperboard materials, and to cellulosic waste comprising or consisting of textiles.

Examples of post-consumer textile waste, include clothing and household articles, which have been discarded or which are not in use for any reason. For example, such waste comprises clothing or household articles that have been worn out, damaged or outgrown.

In one embodiment, the recycled cellulosic waste comprises or consists of textiles in municipal solid waste (also abbreviated "MSW"). Such waste is formed by, e.g., discarded or used clothing, footwear, headwear, carpets and other household textiles, including towels, sheets, blankets and pillowcases, although this is no exhaustive list.

In one embodiment, the recycled cellulosic textile waste material comprises or consists of mixed-coloured textile waste, which includes cotton or other natural fibers, regenerated cellulose fibers or fibers of cellulosic derivatives.

In one embodiment, the mixed-coloured textile waste comprises in particular textile colourants, such as colour pigments, dyes, colourants and combinations thereof, especially dyes.

In particular, the mixed-coloured textile waste typically comprises combinations of textile materials obtained from several sources: recycled textiles containing natural fibres; and natural plant fibres including seed fibres, such as cotton and kapok; bast fibres, such as hemp, jute, kenaf, ramie, abaca and linen (flax); leaf fibres, such as manilla, sisal, ananas and banana; fruit fibres such as coir.

The waste material contains, in addition to a cellulosic part, also non-cellulosic material. Typically, the non-cellulosic material makes up about 1 to 50 % by weight, for example 2 to 40 % by weight, for example 2.5 to 20 % by weight of the cellulosic waster material.

Non-cellulosic fibres are mainly comprised of polyester, such as poly(ethylene) terephthalate, but also fibers of other thermoplastic materials, such as polyamide, polyurethane, polyether-polyurea copolymers (e.g. elastane), polyisoprene and polyethylene/polypropylene are often included in textile waste.

In one embodiment, the cellulosic waste material comprises polycotton. "Polycotton" stands for a material made from a blend of cotton and artificial fibres, in particular polyester fibres, typically polyethylene terephthalate (PET).

In one embodiment, the mixed fibre textile material is a mixed-colour, mixed fibre textile material.

Typically, cellulosic textile waste material also contains non-textile or non-fibrous or non-cellulosics elements, such as labels and certain prints, metal elements (ferrous or non-ferrous), rubber elements, leather elements and plastic elements such as buttons and zippers. These are preferably removed before further treatment of the material.

According to an embodiment, the cellulosic (textile) waste material is, when needed, first conducted to one or more mechanical treatment steps, where the material is mechanically disintegrated to open the structures in the material. The material can be disintegrated with various mechanical devices (such as in a pulper) to provide disintegrated cellulosic material pieces having a size in the region of 0.01 to 1.00 cm² or even smaller pieces corresponding to single fibre units.

In an embodiment, the material is mechanically refined and disintegrated by means of shredding, grinding, grating or milling the textile material to open textile structures in the material. In a further embodiment, a textile material is disintegrated by means of shredding, grinding, grating or milling the material to open the yarn structures in the material.

Generally, fibres having sizes of up to 40 mm are provided.

In one embodiment, the material pieces are disintegrated into single particles having fibre length of ≤ 25mm, preferably ≤ 10 mm, suitably 1 to 6 mm in length. The diameter of the fibers can be less than 0.1 mm, e.g. less than 0.05 mm, such as 10 to 50 µm, e.g. about 15 µm. The disintegration of the material to these sizes provides fibres with surface areas of sizes optimal for contacting with liquids in subsequent chemical steps.

In one embodiment, the recycled cellulosic material is sorted to provide mixed fibre material comprising cellulose. In one embodiment, the mixed fibre textile material has a cellulose content of 50 % by weight of the material or more, suitably 60 % by weight of the material or more, particularly, 70 % by weight of the material or more, preferably 80 % by weight of the material, most preferably the mixed fibre textile material comprises 80 % by weight of the material of cellulose.

In one embodiment, less than 20 % by weight (based on dry weight) of a non-cellulosic fibre, suitably the non-cellulosic fibre component, is polyester.

In one embodiment, the recycled cellulosic material, optionally after a mechanical pretreatment for opening up the structures, is the subjected to one or more chemical treatment steps.

In one preferred embodiment the cellulosic material is contacted with an acid in a first chemical step to obtain acid-treated fibres. Thus, the material is contacted with an acid to provide a slurry or a bed of fibres.

In one embodiment, the acid acts on the cellulosic fibres adjusting the degree of polymerisation of cellulose, particularly decreasing the degree of polymerisation. In one embodiment the degree of polymerisation in terms of viscosity, is reduced from a maximum CED viscosity in the range of 500 to 2500 ml/g, preferably 600 to 1000 ml/g, more preferably 700 to 900 ml/g, particularly 800 ml/g to a minimum CED viscosity in the range of 200 to 550 ml/g, preferably 250 to 500 ml/g, suitably 250 to 450 ml/g, particularly 300 to 350 ml/g.

In one embodiment the acid further acts on monomeric non-cellulosic and inorganic and organic components, dissolving said components for washing out in a subsequent step.

When measuring viscosity of the cellulosic material, only the cellulosic part is considered; the non-cellulosic part does not contribute to the viscosity.

In one embodiment, the acid used in the acid treatment step is selected from the group consisting of mineral acids, such as H₂SO₄, and persulphuric acid, organic acids such as formic acid, acetic acid, performic acid, peracetic acid, and acidic side streams of other industrial processes including pulp mill effluents, and a mixture thereof. The mixture may comprise a combination of mineral acids, a combination of organic acids, a combination of peracids, or a combination of any of mineral acids, organic acids and peracids be they organic or inorganic.

In a preferred embodiment, the recycled cellulosic material is contacted with H₂SO₄.

In one embodiment, the initial acid charge is in the range of 1 to 50 g/l, such as 1 to 40 g/l or 2 to 30 g/l. In an embodiment the acid concentration at the end of the acid cooking is in the range of 1 to 25 g/l. Various acids provide various benefits, e.g. oxidative acid, such as per acids improve dye removal, strong mineral acids improve acid hydrolysis. Organic acids on the other hand are biodegradable and further environmentally friendly in so far as sulphate emissions are kept at zero.

In a further embodiment the cellulosic material is contacted with the acid at a temperature in the range lower than 140 °C, such as 50 to 135 °C, preferably 60 to 120 °C, particularly 65 to 100 °C, such as 60 to 95 °C, suitably >70 °C.

In a further embodiment, the disintegrated cellulosic material is contacted with the acid for a period of 10 to 600 minutes, such as 30 to 240 minutes, preferably 30 to 120 minutes, typically 40-90 minutes.

In addition to decreasing the degree of polymerization of the cellulose fraction the first chemical step provides the benefit of dissolving metals. Once metals are dissolved, they may be washed out of the slurry in subsequent washing steps. In an embodiment the first chemical step further comprises dissolving further acid soluble impurities present in the disintegrated textile material for washing out of the slurry.

The acid-treated fibres are then contacted with an alkaline in a second chemical step. Contacting with an alkaline washes the non-cellulosic components from the slurry, to provide a slurry essentially comprising purified cellulosic fibres, although a small amount of non-cellulosics may remain.

In an embodiment, the acid-treated fibres are washed with water before they are contacted with the alkaline in a second chemical step. In one embodiment the acid-treated fibres are pressed prior to being contacted with the alkaline in the second chemical step.

In a further embodiment the acidic cooking liquor from the first chemical step is displaced by an alkaline cooking liquor for the second chemical step.

In another embodiment, the fibrous pulp obtained by the treatment is pressed and washed before a next processing step.

In an embodiment the second chemical step comprises contacting the acid-treated fibres with an alkali selected from the group consisting of NaOH, KOH, organic (non-ionic) superbases, and a mixture thereof. In a further embodiment, the alkali selected from the group consisting of NaOH, KOH, organic (non-ionic) superbases, and a mixture thereof is comprised in a sulphur containing cooking liquor from a traditional pulping process. In a particular embodiment superbases are an efficient catalyst for hydrolysis of non-cellulosics, such as polyesters. In one embodiment NaOH is used, optionally comprised in a sulphur containing cooking liquor from a traditional pulping process. One benefit of using NaOH is its ready availability in pulp mills. In an embodiment the initial charge of alkali is in the range of 25 to 100 g/l measured after neutralization of any acid residues remained in the acid treated material.

Contacting the fibres with the alkali provides a number of effects. Firstly, the non-cellulosic components, e.g. polymeric non-cellulosic components and keratin including wool, hair and skin residuals is washed from the cellulose and secondly the cellulose swells increasing accessibility to reagents for subsequent processes.

In one embodiment the acid-treated fibres are contacted with the alkali at a temperature in the range of 95 and up to below 140 °C, typically 100 to 130 °C, suitably 105 to 120 °C or about 110 °C.

In a further embodiment the acid-treated fibres are contacted with the alkali for a period of 30 minutes to 240 minutes, typically 60 minutes to 180 minutes, preferably 60 minutes to 120 minutes.

In an embodiment, after an alkaline pulping stage of the above-discussed kind, the CED viscosity of the textile raw material is in the range of 500 to 2500 ml/g, preferably 600 to 1000 ml/g, more preferably 700 to 900 ml/g, particularly 800ml/g and the final viscosity after both the acid step and the alkaline step is 200 to 550 ml/g, preferably 250 to 500 ml/g, suitably 250 to 450 ml/g, particularly 300 to 350 ml/g.

The acid and the alkaline treatment steps are carried out in suitable equipment. One type of reactor for carrying out the acid and alkaline treatments comprises a mixing reactor, in which the fibres are mixed with the cooking liquor. Another type of reactor is a digester either as a single digester or a set of digesters, in which the slurry formed by the fibre and cooking liquor (i.e. acidic or alkaline solution) is circulated by pumping.

In the present context, a "digester" is understood to be a vessel, either pressurized or not pressurized, where the fibre suspension is kept for a prolonged time in order for the intended chemical reactions to take place. The feed can be both to the top or bottom of the vessel and the discharge of the fibres can be enhanced by a discharge device. Such digesters can be equipped with internal screens for displacement of the liquor, while keeping the fibres within the digester. The vessels can be of both vertical and horizontal construction and be operated either batch wise or as continuously process.

Another example of a set of reactors in which the slurry can be circulated is a medium consistency loop. Screw-type continuous reactors are also suitable for use in embodiments. In one embodiment the slurry is circulated in the reactor(s) by pumping.

In the present context, "medium consistency" is to be understood as describing a thick suspension of fibres, water and chemicals that is still transferable by means of, for the purpose, designed pumps. Typically, such suspensions can contain 3-15 % of fibre, more often 6-12 % of fibres, in the form of pulp or pulp derived from recycled cotton, Medium consistency may also be taken to describe a thick suspension of fibres, water and chemicals that is still transferable by means of, for the purpose, designed pumps. Typically, such suspensions can contain 3-15 % of fibre, more often 6-12 % of fibres, from recycled cellulose.

In the present context, "high consistency" is to be understood as standing for a consistency greater than the "medium consistency.

In one embodiment, when operating at temperatures below or up to 100 °C, for example during the acidic treatment, a non-pressurized vessel is used. In one embodiment, when operating at temperatures above 100 °C, for example during alkaline treatment (cf. below), a pressurized vessel is used.

After the pulping steps, the pulp is conducted to an ozone step where it is contacted with ozone under alkaline conditions in order to decolourize the pulp using ozone, e.g. by decomposing dyes, colourants and/or pigments in or removing them from the pulp.

If necessary, the pulp can be washed with water or preferably with alkaline filtrate after the pulping step(s).

In a preferred embodiment, the process step directly (i.e. without any intervening or intermediate chemical processing steps) before ozone decolourization is performed under alkaline conditions. In one embodiment, the ozone treatment is carried out for a pulp obtained from alkaline treatment without an intermediate washing step.

The ozone treatment is carried out by ozonizing the pulp in an aqueous medium. Typically, the pulp is dispersed into the aqueous medium, which preferably contains at least some alkaline agent for maintaining pH in the alkaline range. The pulp slurry preferably has a consistency of 1 to 50 wt %, in particular 1 to 25 wt % or 1 to 15 wt %. Thus, the pulp can be subjected to ozonation at high or medium consistency of the pulp, suitably, ozonizing is carried out at medium consistency. A consistency in the range of 5 to 15 wt % is particularly preferred. In high consistency decolourization the pulp has a consistency of at least 30 wt % suitably within a range of 35-45 wt %.

Ozonation of the pulp slurry is preferably carried out under mixing of the slurry to promote contacting of the cellulosic material and the ozone.

The ozone dose in the decolourization is in the range from 0.5 to 30.0 kg/BDT, for example 0.5 to 15 kg/BDT or 1 to 12 kg/BDT or 1.5 to 10 kg/BDT, preferably about 2.0 to about 6.0 kg/BDT. The temperature of the ozone treatment of the pulp can vary within broad ranges. It is preferred to operate at a temperature of the aqueous ozonizing medium in the range of 45-95 °C, preferably 60-85 °C.

During ozonizing, the initial pH of the aqueous medium is typically higher than 8, preferably between 10 and 13. As the treatment proceeds, the pH of the pulp typically drops. It is preferred to keep maintain a pH in the alkaline range during the ozonation, in particular during the entire ozonation. If needed, an alkaline agent can be added to adjust pH. Preferably, ozonizing of the pulp is carried out at conditions under which the final pH of the aqueous medium at the end of the ozonizing is higher than 7. The initial pH is preferably adjusted with a sodium hydroxide dosage of 0.1 to 5 kg/BDT, for example 0.2-4 kg /BDT.

In one embodiment, sodium hydroxide is used to achieve alkaline conditions of the aqueous medium dosages of NaOH in the range of about 0.01 to 0.5 wt%, such as about 0.05 to 0.25 wt% (calculated from the pulp (BDT)).

The alkaline agent used can be the same as for the alkaline treatment step discussed above.

Typically, ozone acts immediately upon the substrate. In some embodiments, ozone gas is fed into contact with the pulp for up to 2.5 hours.

In an embodiment the final CED viscosity after ozone decolourization step and optional peroxide and/or oxygen bleaching is 200 to 550 ml/g, preferably 220 to 390 ml/g, suitably 250 to 350 ml/g, particularly 300 to 350 ml/g. These intrinsic viscosities correspond to average degree of polymerization (DP) of the cellulose carbamate of 254 to 776, preferably 325 to 669, suitably 325 to 622, particularly 397 to 471. DPs being calculated using the following equation of DP^{0.905} = 0,75 [η] (generally known from literature).

As a result of the ozonation, and after an optional dewatering stage, a decolourized pulp is obtained that has a CIE Whiteness of more than 77, for example in the range of 78-95, preferably 80-90, as determined by ISO 11475:2017. As evidenced by the experimental data given for illustrating some particularly advantageous embodiments, the decolourized cellulosic pulp has an average intrinsic viscosity of 220 to 390 ml/g and a CIE Whiteness of at least 78, such as at least 80, in particular at least 82, for example at least 84. In one embodiment, the CIE Whiteness is in the range of 78-95, typically 80-90.

Surprisingly, ozone treatment in the alkaline range does not significantly reduce viscosity of the material; in particular the loss in viscosity is smaller than that which obtained with ozone in acidic conditions.

It would appear that, in contrast to the use of ozone in bleaching, ozone in decolourization of coloured cellulosic waste will act upon colourants and colourizing pigments and other colourizing components by oxidation and by achieving decomposition primarily of the colourants and colourizing pigments rather than of the cellulosic material as such. For this reason, working under alkaline conditions gives excellent decolourization while maintaining high viscosity.

Further, using ozone to decolourize waste material has several other benefits. The ozonation reaction is rapid. It seems that ozone breaks the conjugated chains or double bonds of dye molecules that provide colour. Organic dyes are degraded and do not generate considerable sludge or residues for further treatment. The bond of the dye to the cellulose may be destroyed so that no residues remain on the fiber. In fact, it would appear that ozone has good selectivity for the colouring components, whereas its reactivity with carbohydrate structure is small.

In one embodiment of the present technology, the degree of polymerization of cellulosic fiber material of a feedstock of recycled, coloured cellulosic fibers, potentially used for textiles, is adjusted in an acid stage, whereas decolorization of the fibers is carried out in an alkaline stage employing ozone.

The afore-going discussion on the action of ozone upon colourants and colourizing pigments and other colouring components of cellulosic material represent merely potential explanations and theories, and the present technology is not limited to the proposed explanations and theories.

After the ozone treatment, the pulp is, in one embodiment, subjected to washing. By washing, alkali, and - typically - colourants and colourizing pigments and other colouring components can be removed.

In one embodiment, the ozone treated pulp is subjected to oxygen, chlorine dioxide or peroxide treatments or combinations thereof.

In one embodiment, oxygen bleaching is carried out to pulp that has not been subjected to neutralization after the ozone treatment. Any oxygen treatment may be combined in an alkaline step with an oxidative alkaline treatment. In one embodiment, an oxygen bleaching step is - alternatively or additionally to a post-treatment - performed before ozone decolourization.

Ozone treatment may also, optionally, be followed by peroxide oxidation under alkaline conditions, optionally in combination with an oxygen bleaching before or after the peroxide oxidation. Thus, in one embodiment, peroxide oxidation is carried out to pulp, which has not been subjecting to neutralization and/or washing after the ozone treatment. In one embodiment, the ozone-treated fibres are pressed prior to being contacted with the hydrogen peroxide

In one embodiment, the ozone-treated material is optionally washed and subjected to hydrogen peroxide bleaching under the following conditions: The pulp media is made alkaline with sodium hydroxide to reach a sodium hydroxide content in the range of about 0.1 to 1 % by weight of dry cellulose. The consistency of the pulp slurry is adjusted to medium consistency level of, for example 8 to 10 % by weight, and hydrogen peroxide is employed at a dosage of about 0.4 to 0.75 % by weight of dry cellulose. Hydrogen peroxide bleaching is carried out at a temperature of about 50 to 90, or 60 to 80 degrees Celsius for 30 to 150 minutes, such as 60 to 120 minutes.

After ozonation and potential oxygen and/or peroxide steps, the treated material is dewatered. In one embodiment the material is dewatered to a water content of less than 50 %, preferably less than 20 %, such as 15 to 5 % by weight.

In one embodiment, a cellulosic textile material is provided, having an average intrinsic viscosity of 220 to 390 ml/g and a CIE Whiteness in the range of 78-95, such as 80-90.

The pulp thus obtained can be used for the same purposes as a conventional dissolving. Thus, it can be used for manufacturing moulded products selected from staple fibres, filament yarn, tow of filaments, shortcut, flock and film. The pulp can also be used for the same purposes as conventional long-fiber pulp, for example in non-woven applications.

In one embodiment, the treated material, in particular textile material, is mixed with urea to provide a mixture and heating the mixture to a temperature of 130 to 150 °C to subject cellulose to reaction with urea to form cellulose carbamate.

The material obtained can also be processed as conventional market dissolving pulp, i.e. dried to a predetermined moisture content, of less than 20 % by weight, for example about 10 % by weight, and preferably cut into sheets and baled, making it suitable for shipping to another location.

### Example 1

Recycled mixed colour sorted cotton textile waste with a CED viscosity of 800 ± 200 ml/g (based on the CED viscosity measurement according to the ISO 5351, modified. Obtained cellulose solution is filtered to measure and calculate viscosity of cellulose fraction of material) containing 4.0±2.8 % of non-cellulosic fibres were mechanically shredded to disintegrate the fabric structure to form of pieces having fibres of a size of ≤25 mm. Non-cellulosic fibres were mainly polyester, but also traces of nylon, isoprene containing material (elastic band) and polyethylene/polypropylene were detected.

The shredded material was chemically pre-treated using a two-stage cooking procedure: In the first acidic stage the shredded material were treated with sulphuric acid at 90 °C for 60 min. In the second alkaline stage the washed acid treated material was chemically pre-treated with sodium hydroxide at 110 °C for 120 min, the pH value of the final washing liquid was 8.3. The viscosity of the chemically pre-treated material was 357 ml/g (ISO 5351, modified) and whiteness 71.1.

In the next stage, ozone decolourization was performed to remove the remaining colour traces from the textile fibers while keeping the textile material viscosity ≥ 300 ml/g after the final bleaching stage. The target was to keep the decrease of the intrinsic viscosity of the cellulose at less than 15 %. A reaction vessel was filled with warm water, and the pre-treated textile material was dispersed into the reactor to achieve a consistency of 10 wt %. pH was adjusted by adding NaOH. The reaction temperature was 60 °C.

In a first test, the dosage of ozone was 2.1 kg/adt and the initial pH for six test points were adjusted with sodium hydroxide solution or with sulphuric acid. The initial pH values were 3.5, 5.5, 6.4, 10.7 (NaOH 0.05 wt %), 11.5 (NaOH 0.15 wt %) and 11.7 (NaOH 0.23 wt %). After the ozone treatment the final pH of the test points were 3.1, 4.0, 4.9, 7.2, 9.0 and 10.0 respectively.

The textile-water slurry samples were washed and whiteness and the viscosity of the samples were measured. Whiteness (ISO 11475) and viscosity (ISO 5351, modified) values as a function of final pH are presented in Figure 1.

In a second test, the dosage of ozone was 3.8 kg/adt and the initial pHs for seven test points were adjusted with sodium hydroxide solution or with sulphuric acid. The initial pH values were 3.3, 5.6, 6.9, 10.9 (NaOH 0.05 wt %), 11.6 (NaOH 0.16 wt %), 11.8 (NaOH 0.22 wt %) and 11.9 (NaOH 0.30 wt %). After the ozone treatment, the final pH values of the test points were 3.1, 4.1, 5.3, 7.8, 7.8, 8.3 and 9.7 respectively. The textile-water slurry samples were washed and whiteness and the viscosity of the samples were measured. Whiteness (ISO 11475) and viscosity (ISO 5351, modified) values as a function of final pH are presented in Figure 1.

As will appear from the attached figure, by increasing the pH from acid into the alkaline range the whiteness of the samples increased from about 76 (CIE WI) to over 80 (CIE WI) for an ozone dosage of 2.1 kg/adt. For a higher dosage (3.8 kg/adt), the increase was even greater: from about 76 (CIE WI), the whiteness rose to a value in the range from 82 to 84 %. For viscosity, a modest decrease under alkaline conditions was noted for both dosages. However, the decrease was smaller under alkaline conditions than under acidic conditions.

### Example 2

Recycled mixed colour sorted cotton textile waste with a CED viscosity of 800 ± 200 ml/g (based on the CED viscosity measurement according to the ISO 5351, modified was treated as described in Example 1. The viscosity of the chemically pre-treated material was 330 ml/g (ISO 5351, modified) and whiteness 73.1 (CIE WI). The treated textile raw material was used in decolourization trial.

Ozone decolourization was performed using an MC loop and pressure reactor. The loop was first filled with warm softened water and the shredded textile (290 kg, BD) was emptied to the system. Next, the raw material and water slurry was fed to a pressure reactor. NaOH, 20 kg/BDT, was fed to the reactor and a consistency measured to 6.6 % with pH 11.9. The textile-water slurry was heated to 70 °C. The estimated ozone concentration fed to the reaction was 16 wt % and the time for the feeding was 155 minutes. Total ozone charge was 4.6 kg /BDT. After the ozone stage the slurry was cooled by adding 3.9 m³ water. Cooled and diluted slurry was dewatered in the screw press. The pH of the filtrate was 9.9. The viscosity of the ozone decolourized material was 320 ml/g (ISO 5351, modified) and whiteness 81.5 (CIE WI).

Next, a peroxide stage was performed on ozone decolourized textile material. The ozone treated material was pumped to the reactor and a consistency of the slurry in the pressure reactor was 6.2 %. The reaction mixture was heated to a reaction temperature of 80 °C and pH was adjusted with NaOH to 11.6. The reaction time in the peroxide stage was 60 minutes and hydrogen peroxide charge was 5 kg/BDT. The viscosity of the decolourized pulp obtained was 308 ml/g (ISO 5351, modified) and whiteness 85.1 (CIE WIE)

### Example 3

Using a decolourized pulp obtained according to Example 2, a carbamation process was carried out as described in Finnish Patents Nos. 112869 and 112795, and in International Patent Application Publication WO 2021/038136 A. Urea was dissolved into water which was added to the pulp to reach a nitrogen content of 1.8 wt % in the cellulose carbamate. Hydrogen peroxide (0.6 wt %) was added to control the final degree of polymerization of the cellulose carbamate, DP 306, equivalent to a viscosity of 236 ml/g (ISO 5351). After the chemical addition, the target dry matter content 70 % was adjusted to facilitate flexible compaction with a Kahl device. Pelletized (compacted) pulp was put back into the mixing reactor where steam was started. The temperature was increased to 135-140 °C. The total reaction time was 3 hours. After the carbamation, the pulp was ground with a grinder twice to improve solubility.

The cellulose carbamate obtained from carbamation process was further dissolved for production of cellulose carbamate fibres by the wet spinning process. The ground air dry cellulose carbamate powder was slurried and dissolved in aqueous sodium hydroxide solution containing dissolved zinc oxide (1.0 wt %) to form cellulose carbamate dope, sodium hydroxide content of 6.5 wt % and cellulose carbamate content of 7.2 wt %. The cellulose carbamate dope obtained from the dissolving process was subsequently filtered using the two-stage backflush filtering process using the 20 µm filter media in the second filtration stage. Wet spinning of filtered and deaerated cellulose carbamate dope was carried out using the acidic spin bath optimized for cellulose carbamate process containing sodium sulphate, free sulphuric acid and aluminium sulphate.

The linear density of the produced stable fibres was 1.25 dtex (ISO 1973). Fibre tenacity at break of the staple fibres was 2.58 cN/dtex and elongation at break of fibres was 10.6 % (ISO 5079). The result showing that decolourized cellulosic pulp is suitable material to produce man-made cellulosic staple fibres and filaments.

The results of the tests show the surprising advantages to be gained by subjecting recycled textile waste materials, after pulping, to an ozone treatment carried out in the alkaline range in contrast to ozone treatment in the acid range: a distinct increase is obtained in whiteness, while the viscosity of the material (pulp) is maintained essentially on its initial level, i.e., no significant drop in viscosity can be seen.

## Claims

1. Method of processing cellulosic waste material, comprising
- providing cellulosic waste material containing colouring substances, such as colour pigments, dyes, colourants and combinations thereof,
- pulping the waste material to produce cellulosic pulp, and
- decolourizing the pulp with ozone under alkaline conditions,
wherein the cellulosic waste material comprises more than 50 % by weight of textile waste material comprising cellulose.

2. The method according to claim 1, wherein said cellulosic waste material further comprises cellulosic waste material selected from
- recycled paper comprising cellulose or lignocellulose,
- recycled paperboard comprising cellulose or lignocellulose, and
- combinations thereof, and/or,
wherein the cellulosic waste material comprises or consists of or consists essentially of recycled cellulosic waste material, such as recycled pre-consumer waste or post-consumer waste or industrial waste or a combination thereof.

3. The method according to claim 1 or 2, wherein said cellulosic waste material is mixed-coloured textile waste comprising cotton fibers or other natural fibres, regenerated cellulose fibers, fibers of cellulosic derivatives or combinations thereof, wherein the cellulosic waste material preferably comprises or consists of mixed-coloured polycotton material.

4. The method according to any of the preceding claims, wherein said cellulosic waste material is subjected to a mechanical treatment before pulping.

5. The method according to any of the preceding claims, wherein said cellulosic waste material is subjected to acid treatment and to alkaline treatment, preferably in that order, before the ozone decolourization step, wherein the method preferably comprises decolourizing the pulp using ozone by decomposing dyes, colourants and/or pigments in or removing them from the pulp.

6. The method according to any of the preceding claims, wherein a process step directly before ozone decolourization is performed under alkaline conditions, and a process step directly after the alkaline ozone decolourization is performed under alkaline conditions.

7. The method according to any of the preceding claims, comprising decolourizing the pulp essentially without degrading the cellulose polymer and/or comprising performing the ozone decolourizing such that the intrinsic viscosity of the cellulose of the pulp, determined by ISO5351, decreases no more than 15 %, preferably less than 10 %, during said decolourizing.

8. The method according to any of the preceding claims, wherein decolourization with ozone is carried out by ozonizing the pulp in an aqueous medium, preferably at a temperature in the range of 45-95 °C, preferably 60-85 °C, the initial pH of said medium typically being over 8, preferably between pH 10-13, during ozonizing and preferably the final pH of said medium after ozonizing being higher than 7.

9. The method according to any of the preceding claims, wherein the ozone dose in the decolourization is in the range from 0.5 to 30.0 kg/BDT, for example 0.5 to 12 kg/BDT or 1 to 10 kg/BDT, preferably 2.0 to 6.0 kg/BDT.

10. The method according to any of the preceding claims, wherein after or before the ozone decolourization step, the pulp is subjected to one or more bleaching stages, in particular using in at least one stage hydrogen peroxide at alkaline conditions.

11. The method according to any of the preceding claims, wherein the pulp is subjected to ozonizing in an aqueous medium at a consistency of 1 to 50 wt %, in particular 1 to 25 wt %, such as 5 to 15 wt %.

12. The method according to any of the preceding claims, wherein the pulp is dewatered to a water content of less than 50 wt %, preferably less than 20 wt % after the decolourization.

13. The method according to any of the preceding claims, wherein the pulp is dried to a moisture content of less than 20 % by weight, in particular about 10 % by weight, and preferably provided as a bale of dried pulp sheets.

14. The method according to any of the preceding claims, wherein the dyes are selected from organic dyes, such as azo compounds, azomethines, anthraquinones, triarylmethane, quinolines, dioxazines, stilbenes, compounds containing amine, alum or sulphonate groups.

15. Decolourized cellulosic pulp obtained by a method according to any of claims 1 to 14, wherein the decolourized cellulosic pulp having an average intrinsic viscosity of 220 to 390 ml/g, as determined by ISO5351, modified, and a CIE Whiteness of 78 or more, e.g. in the range of 78 to 95, such as 80 to 90, as determined by ISO 11475:2017.

16. Use of decolourized textile pulp according to claim 15 in a process for production of cellulose carbamate or in a process for production of viscose or lyocell or for manufacturing non-woven products.

17. The use according to claim 16 in a process for production of cellulose carbamate, wherein the decolourized cellulosic pulp after the decolourization is mixed with urea to provide a mixture and heating the mixture to a temperature of 130 to 150 °C to subject cellulose to reaction with urea to form cellulose carbamate, and optionally the cellulose carbamate is used for manufacturing staple fibres, filament yarn, tow of filaments, shortcut, flock or film.

## Patentansprüche

1. Verfahren zum Verarbeiten von cellulosehaltigem Abfallmaterial, umfassend:
- Bereitstellen von cellulosehaltigem Abfallmaterial, das farbgebende Stoffe wie etwa Farbpigmente, Farbstoffe, Färbemittel und Kombinationen davon enthält,
- Aufschließen des Abfallmaterials, um cellulosehaltige Pulpe zu produzieren,
und
- Entfärben der Pulpe mit Ozon unter alkalischen Bedingungen, wobei das cellulosehaltige Abfallmaterial mehr als 50 Gew.-% textiles Abfallmaterial umfasst, das Cellulose umfasst.

2. Verfahren nach Anspruch 1, wobei das cellulosehaltige Abfallmaterial weiter cellulosehaltiges Abfallmaterial umfasst, das ausgewählt ist aus:
- Recyclingpapier, das Cellulose oder Lignocellulose umfasst,
- Recyclingkarton, der Cellulose oder Lignocellulose umfasst, und
- Kombinationen davon, und/oder:
wobei das cellulosehaltige Abfallmaterial recyceltes cellulosehaltiges Abfallmaterial, wie etwa recycelten Pre-Consumer-Abfall oder Post-Consumer-Abfall oder Industrieabfall oder eine Kombination davon, umfasst oder daraus besteht oder im Wesentlichen daraus besteht.

3. Verfahren nach Anspruch 1 oder 2, wobei das cellulosehaltige Abfallmaterial gemischtfarbiger Textilabfall ist, der Baumwollfasern oder andere Naturfasern, Celluloseregeneratfasern, Fasern aus Cellulosederivaten oder Kombinationen davon umfasst, wobei das cellulosehaltige Abfallmaterial vorzugsweise gemischtfarbiges Polycotton-Material umfasst oder daraus besteht.

4. Verfahren nach einem der vorstehenden Ansprüche, wobei das cellulosehaltige Abfallmaterial vor dem Aufschließen einer mechanischen Behandlung unterzogen wird.

5. Verfahren nach einem der vorstehenden Ansprüche, wobei das cellulosehaltige Abfallmaterial vor dem Ozonentfärbungsschritt einer Säurebehandlung und einer alkalischen Behandlung unterzogen wird, vorzugsweise in dieser Reihenfolge, wobei das Verfahren vorzugsweise umfasst: Entfärben der Pulpe unter Verwendung von Ozon durch Zersetzen von Farbstoffen, Färbemitteln und/oder Pigmenten in oder Entfernen derselben aus der Pulpe.

6. Verfahren nach einem der vorstehenden Ansprüche, wobei ein Prozessschritt unmittelbar vor der Ozonentfärbung unter alkalischen Bedingungen durchgeführt wird und ein Prozessschritt unmittelbar nach der alkalischen Ozonentfärbung unter alkalischen Bedingungen durchgeführt wird.

7. Verfahren nach einem der vorstehenden Ansprüche, umfassend: Entfärben der Pulpe im Wesentlichen ohne Abbauen des Cellulosepolymers, und/oder umfassend: Durchführen der Ozonentfärbung auf solche Weise, dass die intrinsische Viskosität der Cellulose der Pulpe, bestimmt nach ISO5351, während des Entfärbens um nicht mehr als 15 % abnimmt, vorzugsweise um weniger als 10 %.

8. Verfahren nach einem der vorstehenden Ansprüche, wobei die Entfärbung mit Ozon durch Ozonisieren der Pulpe in einem wässrigen Medium ausgeführt wird, vorzugsweise bei einer Temperatur im Bereich von 45-95 °C, vorzugsweise 60-85 °C, wobei der anfängliche pH-Wert des Mediums während des Ozonisierens normalerweise über 8 liegt, vorzugsweise zwischen pH 10-13, und der endgültige pH-Wert des Mediums nach dem Ozonisieren vorzugsweise über 7 liegt.

9. Verfahren nach einem der vorstehenden Ansprüche, wobei die Ozondosis bei der Entfärbung im Bereich von 0,5 bis 30,0 kg/BDT liegt, zum Beispiel 0,5 bis 12 kg/BDT oder 1 bis 10 kg/BDT, vorzugsweise 2,0 bis 6,0 kg/BDT.

10. Verfahren nach einem der vorstehenden Ansprüche, wobei die Pulpe nach oder vor dem Ozonentfärbungsschritt einer oder mehreren Bleichstadien unterzogen wird, insbesondere unter Verwendung von Wasserstoffperoxid unter alkalischen Bedingungen in mindestens einem Stadium.

11. Verfahren nach einem der vorstehenden Ansprüche, wobei die Pulpe einer Ozonisierung in einem wässrigen Medium bei einer Stoffdichte von 1 bis 50 Gew.-% unterzogen wird, insbesondere 1 bis 25 Gew.-%, wie etwa 5 bis 15 Gew.-%.

12. Verfahren nach einem der vorstehenden Ansprüche, wobei die Pulpe nach der Entfärbung auf einen Wassergehalt von weniger als 50 Gew.-% entwässert wird, vorzugsweise weniger als 20 Gew.-%.

13. Verfahren nach einem der vorstehenden Ansprüche, wobei die Pulpe auf einen Feuchtigkeitsgehalt von weniger als 20 Gew.-% getrocknet wird, insbesondere etwa 10 Gew.-%, und vorzugsweise als Ballen aus Bögen getrockneter Pulpe bereitgestellt wird.

14. Verfahren nach einem der vorstehenden Ansprüche, wobei die Farbstoffe aus organischen Farbstoffen ausgewählt sind, wie etwa Azoverbindungen, Azomethine, Anthrachinone, Triarylmethan, Chinoline, Dioxazine, Stilbene, Verbindungen, die Amin-, Alaun- oder Sulfonatgruppen enthalten.

15. Entfärbte cellulosehaltige Pulpe, erlangt durch ein Verfahren nach einem der Ansprüche 1 bis 14, wobei die entfärbte cellulosehaltige Pulpe eine durchschnittliche intrinsische Viskosität von 220 bis 390 ml/g, wie durch ISO5351 (modifiziert) bestimmt, und einen CIE-Weißgrad von 78 oder mehr, z. B. im Bereich von 78 bis 95, wie etwa 80 bis 90, wie durch ISO 11475:2017 bestimmt, aufweist.

16. Verwendung von entfärbter Textilpulpe nach Anspruch 15 in einem Prozess zur Produktion von Cellulosecarbamat oder in einem Prozess zur Produktion von Viskose oder Lyocell oder zum Herstellen von Vliesprodukten.

17. Verwendung nach Anspruch 16 in einem Prozess zur Produktion von Cellulosecarbamat, wobei die entfärbte cellulosehaltige Pulpe nach der Entfärbung mit Harnstoff gemischt wird, um ein Gemisch bereitzustellen, und das Gemisch auf eine Temperatur von 130 bis 150 °C erhitzt wird, um die Cellulose einer Reaktion mit Harnstoff zu unterziehen, um Cellulosecarbamat zu bilden, und wobei optional das Cellulosecarbamat zum Herstellen von Stapelfasern, Filamentgarn, Spinnkabel aus Filamenten, Kurzfasern, Flock oder Folie verwendet wird.

## Revendications

1. Procédé de traitement de déchets cellulosiques, comprenant
- la fourniture de déchets cellulosiques contenant des substances colorantes, telles que des pigments de couleur, des teintures, des colorants et des combinaisons de ceux-ci,
- la réduction en pâte des déchets pour produire de la pâte cellulosique, et
- la décoloration de la pâte avec de l'ozone dans des conditions alcalines, dans lequel les déchets cellulosiques comprennent plus de 50 % en poids de déchets textiles comprenant de la cellulose.

2. Procédé selon la revendication 1, dans lequel lesdits déchets cellulosiques comprennent en outre des déchets cellulosiques sélectionnés parmi
- du papier recyclé comprenant de la cellulose ou de la lignocellulose,
- du carton-pâte recyclé comprenant de la cellulose ou de la lignocellulose, et
- des combinaisons de ceux-ci, et/ou
dans lequel les déchets cellulosiques comprennent ou sont constitués ou sont constitués essentiellement de déchets cellulosiques recyclés, tels que des déchets préconsommation recyclés ou des déchets postconsommation ou des déchets industriels ou une combinaison de ceux-ci.

3. Procédé selon la revendication 1 ou 2, dans lequel lesdits déchets cellulosiques sont des déchets textiles de couleurs mélangées comprenant des fibres de coton ou d'autres fibres naturelles, des fibres de cellulose régénérée, des fibres de dérivés cellulosiques ou des combinaisons de celles-ci, dans lequel les déchets cellulosiques comprennent ou sont de préférence constitués d'un matériau polycoton de couleurs mélangées.

4. Procédé selon l'une quelconque des revendications précédentes, dans lequel lesdits déchets cellulosiques sont soumis à un traitement mécanique avant la réduction en pâte.

5. Procédé selon l'une quelconque des revendications précédentes, dans lequel lesdits déchets cellulosiques sont soumis à un traitement acide et à un traitement alcalin, de préférence dans cet ordre, avant l'étape de décoloration à l'ozone, dans lequel le procédé comprend de préférence la décoloration de la pâte en utilisant de l'ozone en décomposant des teintures, colorants et/ou pigments dans la pâte ou en les retirant de la pâte.

6. Procédé selon l'une quelconque des revendications précédentes, dans lequel une étape de procédé directement avant la décoloration à l'ozone est réalisée dans des conditions alcalines, et une étape de procédé directement après la décoloration à l'ozone alcaline est réalisée dans des conditions alcalines.

7. Procédé selon l'une quelconque des revendications précédentes, comprenant la décoloration de la pâte essentiellement sans dégrader le polymère de cellulose et/ou comprenant la réalisation de la décoloration à l'ozone de sorte que la viscosité intrinsèque de la cellulose de la pâte, déterminée selon ISO5351, ne diminue pas de plus de 15 %, de préférence moins de 10 %, pendant ladite décoloration.

8. Procédé selon l'une quelconque des revendications précédentes, dans lequel la décoloration à l'ozone est mise en œuvre par ozonisation de la pâte dans un milieu aqueux, de préférence à une température dans la plage de 45-95 °C, de préférence 60-85 °C, le pH initial dudit milieu étant typiquement supérieur à 8, de préférence entre pH 10-13, pendant l'ozonisation et de préférence le pH final dudit milieu après ozonisation étant supérieur à 7.

9. Procédé selon l'une quelconque des revendications précédentes, dans lequel la dose d'ozone dans la décoloration est dans la plage de 0,5 à 30,0 kg/BDT, par exemple 0,5 à 12 kg/BDT ou 1 à 10 kg/BDT, de préférence 2,0 à 6,0 kg/BDT.

10. Procédé selon l'une quelconque des revendications précédentes, dans lequel après ou avant l'étape de décoloration à l'ozone, la pâte est soumise à une ou plusieurs étapes de blanchiment, en particulier en utilisant dans au moins une étape de peroxyde d'hydrogène dans des conditions alcalines.

11. Procédé selon l'une quelconque des revendications précédentes, dans lequel la pâte est soumise à une ozonisation dans un milieu aqueux à une consistance de 1 à 50 % en poids, en particulier 1 à 25 % en poids, tel que 5 à 15 % en poids.

12. Procédé selon l'une quelconque des revendications précédentes, dans lequel la pâte est déshydratée jusqu'à une teneur en eau inférieure à 50 % en poids, de préférence moins de 20 % en poids après la décoloration.

13. Procédé selon l'une quelconque des revendications précédentes, dans lequel la pâte est séchée jusqu'à une teneur en humidité inférieure à 20 % en poids, en particulier environ 10 % en poids, et de préférence fournie en tant que balle de feuilles de pâte séchée.

14. Procédé selon l'une quelconque des revendications précédentes, dans lequel les teintures sont sélectionnées parmi des teintures organiques, telles que des composés azoïques, azométhines, anthraquinones, triarylméthane, quinoléines, dioxazines, stilbènes, composés contenant des groupes amine, alun ou sulfonate.

15. Pâte cellulosique décolorée obtenue par un procédé selon l'une quelconque des revendications 1 à 14, dans laquelle la pâte cellulosique décolorée présente une viscosité intrinsèque moyenne de 220 à 390 ml/g, tel que déterminé par ISO5351, modifiée, et une blancheur CIE de 78 ou plus, par ex. dans la plage de 78 à 95, telle que 80 à 90, telle que déterminée par ISO 11475:2017.

16. Utilisation de pâte textile décolorée selon la revendication 15 dans un processus de production de carbamate de cellulose ou dans un processus de production de viscose ou de lyocell ou pour la fabrication de produits non tissés.

17. Utilisation selon la revendication 16 dans un processus de production de carbamate de cellulose, dans lequel la pâte cellulosique décolorée après la décoloration est mélangée à de l'urée pour fournir un mélange et le chauffage du mélange à une température de 130 à 150 °C pour soumettre de la cellulose à une réaction avec de l'urée pour former du carbamate de cellulose, et facultativement le carbamate de cellulose est utilisé pour la fabrication de fibres discontinues, filaments, câbles de filaments, fibres courtes, flocons ou films.
